# EUROPÄISCHE PATENTSCHRIFT

(11) **EP 1 655 221 B1**
(45) Veröffentlichungstag und Bekanntmachung des Hinweises auf die Patenterteilung: **09.07.2008**
(21) Anmeldenummer: 05023849.2
(22) Anmeldetag: 02.11.2005
(51) Int. Cl.: B64C 27/59, B64C 27/72

(54) **Einzelblatt-Steuerungsvorrichtung für einen Hubschrauberhauptrotor mit zusätzlicher separater Kollektiv-Blattsteuerung**
Individual blade control for a helicopter main rotor with additional separate collective blade control
Contrôle individuel de pales d'un rotor principal d'hélicoptère avec contrôle de pas collectif séparé additionnel

(30) Priorität: 03.11.2004 DE 102004053001
(43) Veröffentlichungstag der Anmeldung: 10.05.2006
(73) Patentinhaber: ZF FRIEDRICHSHAFEN AG, 88038 Friedrichshafen (DE)
(72) Erfinder: Arnold, Uwe, 34121 Kassel (DE)

(56) Entgegenhaltungen:
- EP-A- 0 729 883
- DE-A1- 10 022 732
- DE-A1- 19 841 853
- US-A- 4 379 678
- US-A- 5 011 373

## Beschreibung

Die Erfindung betrifft eine Einzelblattsteuerungsvorrichtung an einem Hubschrauberhauptrotor nach dem Oberbegriff des Hauptanspruchs.

Die Steuerung eines Hubschraubers erfolgt durch kollektive und zyklische Einstellwinkelverstellung der Rotorblätter. Bei der kollektiven Einstellwinkelverstellung werden alle Rotorblätter in gleichem Maße verstellt, während bei der einfachen - monozyklischen - Einstellwinkelverstellung den einzelnen Rotorblättern während eines Umlaufs ein sinusförmiger Einstellwinkelverlauf aufgeprägt wird. Bekannte Lösungen für diese Steueraufgaben beruhen auf der Verwendung einer Taumelscheibe oder einer sogenannten Spinnensteuerung, wobei die Taumelscheibe oder die Spinne dazu dient, sowohl die kollektiven als auch die monozyklischen Steueranteile vom nichtdrehenden System der Hubschrauberzelle ins drehende System des ubschrauberhauptrotors zu übertragen.

Ein niedrigeres Vibrationsniveau, bessere Flugleistungen und eine geringere Geräuschemission können erzielt werden, indem der kollektiven und monozyklischen Einstellwinkelverstellung individuell höherfrequente Einstellwinkeländerungen überlagert werden.

Die DE 100 52 757 A1 zeigt eine auf dem Prinzip der Spinnensteuerung beruhende Rotorblattsteuerungsvorrichtung für einen Hubschrauberhauptrotor mit vier Rotorblättern. Bei dieser Steuerungsvorrichtung besteht die Steuerspinne aus zwei relativ zueinander bewegbaren Teilen, so dass zwei gegenüberliegenden von vier Rotorblättern neben den kollektiven und monozyklischen Steueranteilen weitere Steueranteile überlagert werden können. Die US 4930988 zeigt eine Steuerungsvorrichtung mit einer Taumelscheibe für einen Hubschrauberhauptrotor mit vier Rotorblättern, bei dem im nichtdrehenden System ein Aktuator vorgesehen ist, dessen Steuerbewegung auf zwei gegenüberliegende der vier Rotorblätter wirken.

Die Systeme gemäß der DE 100 52 757 und der US 4930988 verfügen also über einen weiteren Freiheitsgrad, so dass bei einem Hubschrauberhauptrotor mit vier Rotorblättern den Rotorblättern unabhängig voneinander neben den kollektiven und monozyklischen auch höherharmonische Steueranteile aufgeprägt werden können. Allerdings sind diese bekannten Systeme auf Hubschrauberhauptrotoren mit vier Rotorblättern begrenzt.

Bei einem anderen Lösungskonzept wird auf die mechanische Einsteuerung aus dem nichtdrehenden System verzichtet und sämtliche Steuerbewegungen werden ausschließlich durch Aktuatoren ausgeführt, welche im drehenden System den Rotorblättern individuell zugeordnet sind. Die US 4379678 zeigt eine solche Einzelblattsteuerungsvorrichtung die ohne eine Taumelscheibe oder eine Steuerspinne funktioniert. Allerdings müssen die den Rotorblättern individuell zugeordneten Aktuatoren sehr hohe Stellwege aufweisen. Die Aktuatoren sind daher groß und schwer und weisen einen hohen Leistungsbedarf auf. Das System ist außerdem wegen der geforderten Ausfallsicherheit mehrfach redundant und daher aufwändig, da bei einem Ausfall der Aktuatoren im drehenden System jegliche Steuerungsmöglichkeit des Hubschrauberhauptrotors entfallen würde.

Schließlich zeigt die DE 198 41 853 A1 eine Einzelblattsteuerungsvorrichtung für einen Hubschrauberhauptrotor, die eine Taumelscheibe zur Einsteuerung der kollektiven und monozyklischen Blattverstellung aufweist und außerdem den Rotorblättern individuell zugeordnete Aktuatoren im drehenden System. Bei diesem System wird die Primärsteuerung - also die kollektive und die monozyklische Blattwinkelverstellung - durch die Taumelscheibe realisiert, während die den Rotorblättern individuell zugeordneten Aktuatoren im drehenden System lediglich für Zwecke der Sekundärsteuerung - also für die Einsteuerung von höherfrequenten Einstellwinkeländerungen - dient. Wesentliche Steueraufgaben können also durch Stellglieder bewerkstelligt werden, die unterhalb der Taumelscheibe im nichtdrehenden System angeordnet sind. An dieser Stelle ist ihre Ansteuerung und Leistungsversorgung einfacher als die Ansteuerung und Leistungsversorgung der Aktuatoren im drehenden System. Die individuellen Aktuatoren im drehenden System können aufgrund der Primärsteuerung durch die Taumelscheibe kleiner und leichter ausgeführt werden, als wenn sämtliche Einstellwinkelverstellungen von den individuellen Aktuatoren im drehenden System ausgeführt werden müssten. Da dieses System jedoch eine vollständige Primärsteuerung zusätzlich zur individuellen Steuerung im drehenden System aufweist ist es relativ aufwändig. Die Taumelscheibe ist ein hochbelastetes Bauteil, das einen nicht zu vernachlässigenden Anteil zum Gewicht und den Kosten eines Hubschrauberhauptrotors beiträgt. Die Lagerung der Taumelscheibe, die entlang des Rotormastes axial verschiebbar und außerdem in alle Richtungen neigbar sein muss, ist aufwändig. Zur Neigungsverstellung der Taumelscheibe müssen im nichtdrehenden System drei Stellglieder bzw. Booster vorgesehen sein.

Der Erfindung liegt daher die Aufgabe zugrunde, eine Einzelblattsteuerungsvorrichtung für einen Hubschrauberhauptrotor anzugeben, bei der keine Taumelscheibe benötigt wird, bei der die Anzahl der Rotorblätter nicht auf vier begrenzt ist und bei welcher die Aktuatoren im drehenden System dennoch klein und leichtbauend sein können. Ferner soll ein Verfahren zur Steuerung eines Hubschraubers mit einer derartigen Einzelblattsteuerungsvorrichtung angegeben werden, welches eine hohe Betriebssicherheit gewährleistet.

Diese Aufgabe wird durch eine auch die Merkmale des kennzeichnenden Teils des Hauptanspruchs aufweisende Einzelblattsteuerungsvorrichtung gelöst. Vorteilhafte Ausgestaltungen sowie Betriebsverfahren sind durch die abhängigen Ansprüche gegeben.

Die erfindungsgemäße Einzelblattsteuerungsvorrichtung macht also auch von dem vorteilhaften Konzept der Auftrennung zwischen Primär- und Sekundärsteuerung Gebrauch, wobei jedoch durch die Primärsteuerung ausschließlich kollektive Steuerbewegungen vom nichtdrehenden System ins drehende System übertragen werden und die Sekundärsteuerung sämtliche zyklischen Steuerungsaufgaben erfüllt. Gegenüber einer Taumelscheibe die sowohl axial verschiebbar als auch neigbar sein muss, ist ein Mittel zur Übertragung von ausschließlich kollektiven Steuerbewegungen mit wesentlich geringerem Aufwand realisierbar. Bei einer vorteilhaften Ausgestaltung besteht dieses Mittel aus einer durch den hohlen Rotormast verlaufenden Stange, die von Stellgliedern im nichtdrehenden System relativ zum Rotormast vertikal verschiebbar ist, wobei jeder individuelle Aktautor im drehenden System mit einem Ende der Stange verbunden ist.

Vorteilhafterweise ist die Autorität, also der Einstellwinkelverstellbereich jedes Rotorblattes aufgrund einer Verstellung des zugeordneten individuellen Aktuators nur so groß, dass bei einem Ausfall des individuellen Aktuators das Rotorblatt mit dem Mittel zur mechanischen Übertragung von ausschließlich kollektiven Steuerbewegungen in eine verträgliche Position verstellbar ist.

Die erfindungsgemäße Einzelblattsteuerungsvorrichtung weist vorteilhafterweise einen Steuercomputer auf, der über Signalleitungen mit Sensoren verbunden ist, die den individuellen Aktuatoren zugeordnet sind, zur Ermittlung, ob eine Störung oder ein Ausfall der Steuerung eines Rotorblattes vorliegt.

Bei einem vorteilhaften Betriebsverfahren zur Steuerung eines Hubschraubers mit einer erfindungsgemäßen Steuervorrichtung werden einer Steuereinheit Steuereingaben eines Piloten zugeführt und die Steuereinheit steuert sowohl die den einzelnen Rotorblättern zugeordneten Aktuatoren als auch das Mittel bzw. die Stellglieder zur mechanischen Übertragung von ausschließlich kollektiven Steuerbewegungen an. Dabei werden kollektive Steueranteile zumindest zum größten Teil durch das Mittel zur mechanischen Übertragung eingesteuert, während sämtliche zyklische Steueranteile ausschließlich durch die individuellen Aktuatoren im drehenden System eingesteuert werden.

Im Falle des Ausfalls der Steuerung eines Rotorblatts bei einem Hubschrauber mit mindestens vier Rotorblättern kann in vorteilhafter Weise ein gegenüberliegendes Rotorblatt derart angesteuert werden, dass ein vom ausgefallenen Rotorblatt erzeugte veränderte Steuerwirkung ausgeglichen wird. Dabei wird die Steuerautorität der anderen Rotorblätter erhöht, um die entfallene Steuerwirkung des ausgefallenen Rotorblatts und des dem ausgefallenen Rotorblatt gegenüberliegenden Rotorblatt zu kompensieren. Die hierfür erforderliche höhere Steuerautorität beziehungsweise der große Einstellwinkelverstellbereich der Rotorblätter kann durch die erfindungsgemäße Steuerungsvorrichtung erreicht werden, ohne dass hierfür die den Rotorblättern im drehenden System zugeordneten Aktuatoren für übermäßig große Stellwege ausgelegt sein müssten, da auch große Änderungen des kollektiven Einstellwinkels mechanisch vom nichtdrehenden System ins drehende System übertragen werden können.

Bei einem Hubschrauber mit einer Anzahl von Rotorblättern, welche eine symmetrische Gruppierung von Rotorblättern in mindestens zwei Gruppen ermöglicht, insbesondere mit 4, 6, 8 oder 9 Rotorblättern wird vorteilhafterweise im Falle des Ausfalls der Steuerung eines Rotorblattes die Gruppe von Rotorblättern, welcher das ausgefallene Rotorblatt angehört, gegenüber der oder den anderen Gruppen von Rotorblättern unterschiedlich zyklisch und/oder kollektiv angesteuert.

Weiterhin können im Falle des Ausfalls der Steuerung eines Rotorblattes Veränderungen im mittleren Rotorschub durch Anpassen des Kollektivwinkels bei allen oder einer symmetrischen Gruppe von nicht ausgefallenen Rotorblättern ausgeglichen werden.

Im Falle des Ausfalls der Steuerung eines Rotorblattes können alternativ zur Kompensation der Steuerwirkung den beiden unmittelbar benachbarten Rotorblättern geänderte Einstellwinkelverläufe aufgeprägt werden.

Vibrationen, die durch den Ausfall verursacht werden, können vorteilhafterweise durch eine Einsteuerung von höherharmonischen Einstellwinkelverläufen an den anderen Rotorblättern unterdrückt werden.

Bei Ausfällen dienen Sensoren, die über Signalleitungen mit dem zentralen Steuercomputer verbunden sind dazu, die vorliegende Ausfallart zu bestimmen. Je nachdem welche Ausfallart bestimmt wurde, werden geeignete Rekonfigurierungsmaßnahmen zugeordnet.

Die Änderung des kollektiven Einstellwinkels ist üblicherweise bei weitem nicht so dynamisch wie die Änderung des zyklischen Einstellwinkels, so dass keine großen Steuerkräfte vom nichtdrehenden System in das drehende System mechanisch übertragen werden müssen. Das Konzept läßt sich gut in eine Fly-by-wire- bzw. Fly-by-light-Architektur wie sie heute bei Flächenflugzeugen üblich ist integrieren. Selbst bei Ausfall von Teilen der Sekundärsteuerung ist immer noch der Kollektivsteuerbereich vorhanden.

Da die Steuerinformation und die benötigte Steuerleistung der harmonischen Einzelblattsteuerung erst im drehenden System miteinander verknüpft werden, ist eine Stellenergiegewinnung im drehenden System möglich, zum Beispiel durch Ausnutzung des Staudrucks durch das Prinzip der Servoklappe.

Gegenüber einem Normalbetrieb ist auch ein degradierter Notlaufbetrieb möglich, bei dem nur der für die zu fordernden Notflugeigenschaften erforderliche zyklische Steuerbereich ausfallsicher und entsprechend redundant realisiert werden muss. Eine Degradation der Flugleistungen und/oder der Manövrierfähigkeit, die sich beispielsweise in einer Verringerung der maximalen Vorwärts-, Seitwärts-, oder Rückwärtsgeschwindigkeit äußern kann, wird für den Fall von sehr unwahrscheinlichen Teilsystemausfällen zugelassen.

Mit dem erfindungsgemäßen Betriebsverfahren und den Ausgestaltungen werden unzulässige große Schlag- und Schwenkwinkelamplituden verhindert und gewährleistet, dass die für einen getrimmten Flugzustand erforderlichen Rotor-Kräfte und -Momente beibehalten werden.

Außerdem werden beim Ausfall eines Rotorblattaktuators eine Reststeuerfähigkeit und eine eingeschränkte Manövrierfähigkeit (Manöverreserve) gewährleistet sowie unzulässig hohe Vibrationen verhindert.

Die Erfindung wird anhand der beiliegenden Figuren näher erläutert. Darin zeigen
- Fig. 1 schematisch einen erfindungsgemäßen Hubschrauberhauptrotor und
- Fig. 2 einen Steuerzustand eines erfindungsgemäßen Hubschrauberhauptrotors.

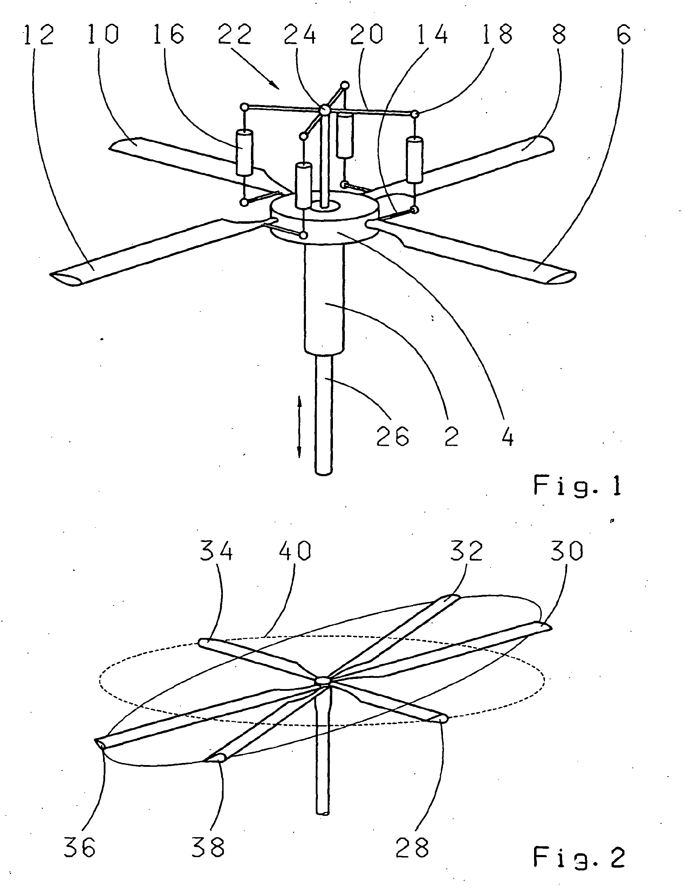

In dem in Fig. 1 gezeigten Ausführungsbeispiel ist mit 2 der Rotormast eines nicht vollständig dargestellten Hubschraubers bezeichnet. Der Rotormast 2 ist über ein Getriebe von Antriebsmaschinen antreibbar. Er trägt eine Rotornabe 4 an deren Umfang verteilt vier Rotorblätter 6, 8, 10, 12 angeordnet sind. Jedes der Rotorblätter 6, 8, 10, 12 weist ein Blatthorn 14 auf. Jedem Rotorblatt ist im drehenden System ein Aktuator 16 zugeordnet, der mit einem Ende mit einem Blatthorn 14 eines Rotorblatts 6 verbunden ist. Das andere Ende 18 des Aktuators ist mit einem Arm 20 einer Spinne 22 verbunden. Die Arme 20 der Spinne 22 erstrecken sich in einer gegenüber dem Rotormast 2 nicht neigbaren Ebene radial nach außen. In ihrem Zentrum 24 ist die Spinne 22 mit einer Stange 26 verbunden, die Stange 26 ist vom nichtdrehenden System der Hubschrauberzelle durch einen nicht dargestellten Aktuator gegenüber dem Rotormast vertikal verschiebbar. Sie verläuft durch den hohlen Rotormast 2. Bei einer vertikalen Verschiebung der Stange 26 werden alle den Rotorblättern individuell zugeordneten Aktuatoren 16 gleichermaßen bewegt, sodass jedes Rotorblatt eine entsprechende gleiche Einstellwinkeländerung erfährt.

Fig. 2 zeigt schematisch die Lage der Rotorblätter eines Hauptrotors mit sechs Rotorblättern 28, 30, 32, 34, 36, 38. Bei dem Rotorblatt 34 ist die Steueraktuatorik ausgefallen. Die Blattspitze dieses Rotorblatts 34 bewegt sich dadurch auf der abweichenden Rotorblattebene 40. Damit keine für den Hubschrauber schädliche "aerodynamische Unwucht" entsteht, wird das gegenüberliegende Rotorblatt 28 gezielt in die gleiche Stellung gebracht wie das Rotorblatt mit ausgefallenem Aktuator 34, so dass es sich ebenfalls auf der Rotorblattebene 40 bewegt. Die übrigen Blätter 30, 32, 36, 38 werden zur Übernahme der verlorenen Steuerwirkung der Rotorblätter 28, 34 mit entsprechend höherer Amplitude angesteuert.

### Bezugszeichen

- 2: Rotormast
- 4: Rotornabe
- 6-12: Rotorblatt
- 14: Blatthorn
- 16: Aktuator
- 18: Ende
- 20: Arm
- 22: Spinne
- 24: Zentrum
- 26: Stange
- 28-38: Rotorblatt
- 40: Rotorblattebene

## Patentansprüche

1. Einzelblattsteuerungsvorrichtung an einem Hubschrauberhauptrotor mit einem drehantreibbaren Rotormast (2), mit einer am Rotormast (2) angeordneten Rotornabe (4), mit mehreren am Umfang der Rotornabe (4) angeordneten Rotorblättern (6, 8, 10, 12), mit Mitteln zum Übertragen von kollektiven und zyklischen Steuervorgaben von einem nichtdrehenden System der Hubschrauberzelle in ein drehendes System des Hubschrauberhauptrotors, wobei die Einzelblattsteuerungsvorrichtung darin besteht, dass jedem Rotorblatt im drehenden System mindestens ein individueller Aktuator (16) zur Einstellwinkelverstellung zugeordnet ist, **dadurch gekennzeichnet, dass** in der Einzelblattsteuerungsvorrichtung zusätzlich ein Mittel (26) zur mechanischen Übertragung von ausschließlich kollektiven Steuerbewegungen vom nichtdrehenden System ins drehende System vorgesehen ist, dessen Steuerbewegungen im drehenden System Steuerbewegungen der individuellen Aktuatoren überlagert werden.

2. Einzelblattsteuerungsvorrichtung nach Anspruch 1, **dadurch gekennzeichnet, dass** die Aktuatoren Linearaktuatoren mit zwei relativ zueinander bewegbaren Enden sind, von denen jeder mit einem Ende mit dem Mittel zur Übertragung der ausschließlich kollektiven Steuerbewegung verbunden ist und mit dem anderen Ende mit einem Blatthorn eines Rotorblatts verbunden ist.

3. Einzelblattsteuerungsvorrichtung nach Anspruch 2, **dadurch gekennzeichnet, dass** das Mittel zur mechanischen Übertragung der kollektiven Steuerbewegungen ein relativ zum Rotormast vertikal verschiebbares Element umfasst.

4. Einzetblattsteuerungsvorrichtung nach Anspruch 3, **dadurch gekennzeichnet, dass** zur vertikalen Verschiebung des Elements im nichtdrehenden System des Hubschraubers ein Aktuator vorgesehen ist.

5. Einzelblattsteuerungsvorrichtung nach Anspruch 3 oder 4, **dadurch gekennzeichnet, dass** der Rotormast hohl ausgebildet ist dass vertikal verschiebbare Element eine durch den Rotormast verlaufende Stange (26) ist und dass jeder individuelle Aktuator (16) im drehenden System mit einem Ende mit der Stange verbunden ist.

6. Einzelblattsteuerungsvorrichtung nach Anspruch 5, **dadurch gekennzeichnet, dass** zur Verbindung der Aktuatoren (16) der Stange (26) eine aus mehreren Armen bestehenden starre Spinne (22) vorgesehen ist, die in ihrem Zentrum (24) mit der Stange (26) verbunden ist und deren Arme (20) sich in einer gegenüber dem Rotormast (2) nicht neigbaren Ebene radial nach außen erstrecken, wo sie mit den Enden (18) der Aktuatoren (16) verbunden sind.

7. Einzelblattsteuerungsvorrichtung nach einem der vorhergehenden Ansprüche, **dadurch gekennzeichnet, dass** für jedes Rotorblatt eine Autorität aufgrund einer Verstellung des individuellen Aktuators nur so groß ist, dass bei einem Ausfall des individuellen Aktuators das Rotorblatt mit dem Mittel zur mechanischen Übertragung von ausschließlich kollektiven Steuerbewegungen in eine verträgliche Position verstellbar ist.

8. Einzelblattsteuerungsvorrichtung nach einem der vorhergehenden Ansprüche, **dadurch gekennzeichnet, dass** ein Steuercomputer vorgesehen ist, der über Signalleitungen mit Sensoren verbunden ist, die den individuellen Aktuatoren zugeordnet sind, zur Ermittlung, ob eine Störung oder ein Ausfall der Steuerung eines Rotorblattes vorliegt.

9. Verfahren zur Steuerung eines Hubschraubers mit einer individuellen Rotorblattsteuerungsvorrichtung nach einem der vorhergehenden Ansprüche, bei dem einer Steuereinheit Steuereingaben eines Piloten zugeführt werden und die Steuereinheit abhängig von den Steuereingaben sowohl die den einzelnen Rotorblättern zugeordneten Aktuatoren (16), als auch die Mittel zur mechanischen Übertragung von ausschließlich kollektiven Steuerbewegungen ansteuert, wobei kollektive Steueranteile zumindest zum größten Teil durch die Mittel zur mechanischen Übertragung von ausschließlich kollektiven Steuerbewegungen und zyklische Steueranteile ausschließlich durch die individuellen Aktuatoren (16) im drehenden System eingesteuert werden.

10. Verfahren nach Anspruch 9 für einen Hubschrauber mit mindestens 4 Rotorblättern, **dadurch gekennzeichnet, dass** im Falle des Ausfalls der Steuerung eines Rotorblattes (34) ein gegenüberliegendes Rotorblatt (28) derart angesteuert wird, dass ein vom ausgefallenen Rotorblatt (34) erzeugtes Nick- oder Rollmoment ausgeglichen wird und dass die Steuerautorität der anderen Rotorblätter (30, 32, 36, 38) erhöht wird, um die entfallene Steuerwirkung des ausgefallenen Rotorblatts und des dem ausgefallenen Rotorblatt gegenüberliegenden Rotorblatt zu kompensieren.

11. Verfahren nach Anspruch 9 oder 10 zur Steuerung eines Hubschrauber mit einer Anzahl von Rotorblättern, welche eine symmetrische Gruppierung von Rotorblättern in mindestens zwei Gruppen ermöglicht, insbesondere mit 4, 6, 8 oder 9 Rotorblättern, **dadurch gekennzeichnet, dass** im Falle des Ausfalls der Steuerung eines Rotorblattes (34) die Gruppe von Rotorblättern welcher das ausgefallene Rotorblatt angehört gegenüber der oder den anderen Gruppen von Rotorblättern unterschiedlich zyklisch und/oder kollektiv angesteuert wird.

12. Verfahren nach einem der Ansprüche 9 bis 11, **dadurch gekennzeichnet, dass** im Falle des Ausfalls der Steuerung eines Rotorblattes (34) Veränderungen im mittleren Rotorschub durch Anpassen des Kollektivwinkels bei allen oder einer symmetrischen Gruppe von nicht ausgefallenen Rotorblättern ausgeglichen werden.

13. Verfahren nach einem der Ansprüche 9 bis 11, **dadurch gekennzeichnet, dass** im Falle des Ausfalls der Steuerung eines Rotorblattes (34) zur Kompensation der Steuerwirkung den beiden unmittelbar benachbarten Rotorblättern geänderte Einstellwinkelverläufe aufgeprägt werden.

14. Verfahren nach einem der Ansprüche 9 bis 13, **dadurch gekennzeichnet, dass** im Falle des Ausfalls der Steuerung eines Rotorblattes (34) Vibrationen, die durch den Ausfall verursacht werden durch eine Einsteuerung von höherharmonischen Einstellwinkelverläufen an den anderen Rotorblättern unterdrückt werden.

15. Verfahren nach einem der Ansprüche 9 bis 14, **dadurch gekennzeichnet, dass** zwischen unterschiedlichen Ausfallarten unterschieden wird, dass aufgrund von erfassten oder ermittelten Daten auf eine vorliegende Ausfallart geschlossen wird, und dass jeder Ausfallart geeignete Rekonfigurierungsmaßnahmen zugeordnet werden.

## Claims

1. Single-blade control system on a helicopter main rotor with a rotary-drive rotor mast (2), with a rotor hub (4) arranged on the rotor mast (2), with several rotor blades (6, 8, 10, 12) arranged on the circumference of the rotor hub (4), with means for the transmission of collective and cyclic control values from a nonrotating system of the helicopter structure to a rotating system of the helicopters main rotor, with the single-blade control system assigning to each rotor blade of the rotating system at least one individual actuator (16) for control of the blade-setting angle, **characterized in that** the single-blade control system additionally provides a means (26) for the mechanical transmission of exclusively collective control movements from the nonrotating system to the rotating system, with the control movements of the rotating system being superposed by the control movements of the individual actuators.

2. Single-blade control system according to daim 1, **characterized in that** the actuators are linear actuators with two ends that are movable relative to one another, and that each is linked with one end to the means for transmission of the exclusively collective control movement and with the other end to a hom of a rotor blade.

3. Single-blade control system according to daim 2, **characterized in that** the means for mechanical transmission of the collective control movements comprises an element that is vertically displaceable relative to the rotor mast

4. Single-blade control system according to daim 3, **characterized in that** an actuator is provided for vertical displacement of the element in the nonrotating system of the helicopter.

5. Single-blade control system according to daim 3 or 4, **characterized in that** the rotor mast is hollow, that the vertically displaceable element is a rod (26) running through the rotor mast (26), and that each individual actuator (16) in the rotating system is linked with one end to the rod.

6. Single-blade control system according to daim 5, **characterized in that** for connection of the actuators (16) of the rod (26) there is a multiarmed rigid spider (22), whose center (24) is linked to the rod (26) and whose arms (20), in a plane that is not tiltable towards the rotor mast (2), extend radially outward, where they are linked to the ends (18) of the actuators (16).

7. Single-blade control system according to one of the preceding claims, **characterized in that** the authority for adjustment of the individual actuator for each rotor blade is such that setting of an acceptable position of the rotor blade is possible in the event of a failure of the individual actuator by means of mechanical transmission of exclusively collective control movements.

8. Single-blade control system according to one of the preceding claims, **characterized in that** a control computer is provided which is linked via signal lines to sensors assigned to the individual actuators for determination of a malfunction or failure of the control of a rotor blade.

9. Method for the control of a helicopter with an individual rotor blade control system according to one of the preceding claims, with a control unit being fed with the pilots control inputs and - dependent on said control inputs - controlling the actuators (16) assigned to the individual rotor blades as well as the means for mechanical transmission of exclusively collective control movements, with collective control shares being applied at least for the most part by the means for mechanical transmission of exclusively collective control movements, and with cyclic control shares being applied exclusively by means of the individual actuators (16) in the rotating system.

10. Method according to daim 9 for a helicopter with at least 4 rotor blades, **characterized in that** in the event of a failure of the control of a rotor blade (34), an opposite rotor blade (28) will be controlled in such a way that a pitch or rolling moment generated by the failing rotor blade (34) is balanced and that the control authority of the other rotor blades (30, 32, 36, 38) is increased to compensate for the absent control effect of the failed rotor blade as well as that of the rotor blade opposite to the failed rotor blade.

11. Method according to daim 9 or 10 for the control of a helicopter with a number of rotor blades permitting symmetric arrangement of the rotor blades in at least two groups, in particular with 4, 6, 8 or 9 rotor blades, **characterized in that** in the event of a failure of the control of a rotor blade (34), the group of rotor blades to which the failed rotor blade belongs will be controlled cyclically and/or collectively in a different way compared to the other group or groups of rotor blades.

12. Method according to one of the daims 9 through 11, **characterized in that** in the event of a failure of the control of a rotor blade (34), changes in the average rotor thrust will be balanced through adjustment of the collective angle of all rotor blades or of those of a symmetric group of operating rotor blades.

13. Method according to one of the daims 9 through 11, **characterized in that** in the event of a failure of the control of a rotor blade (34), changed blade angles will be applied to the two immediately adjacent rotor blades for compensation of the control effect.

14. Method according to one of the daims 9 through 13, **characterized in that** in the event of a failure of the control of a rotor blade (34), the vibrations caused by the failure will be suppressed through application of higher-harmonious setting angles on the other rotor blades.

15. Method according to one of the daims 9 through 14, **characterized in that** different failure types are differentiated, that the type of failure is determined on the basis of recorded or ascertained data, and that suitable reconfiguration measures are assigned to each type of failure.

## Revendications

1. Dispositif de commande individuelle des pales d'un rotor principal d'un hélicoptère doté d'un arbre de rotor (2) entraînable en rotation, d'un moyeu de rotor (4) disposé sur l'arbre de rotor (2), de plusieurs pales de rotor (6, 8,10,12) disposées sur le pourtour du moyeu de rotor (2), de moyens de transmission de consignes de commande collectives et cycliques d'un système non-rotatif de la cellule de l'hélicoptère à un système rotatif du rotor principal de l'hélicoptère, sachant que le principe de fonctionnement du dispositif de commande individuelle des pales consiste en l'association au moins d'un actionneur individuel (16) à chaque pale du rotor dans le système rotatif et permettant le réglage individuel des angles, **caractérisé en ce que** dans le dispositif de commande individuelle des pales est prévu, en plus, un moyen (26) permettant exclusivement la transmission mécanique de mouvements de commande collectifs du système non-rotatif au système rotatif, et dont les mouvements de commande dans le système rotatif sont superposés aux mouvements de commande des actionneurs individuels.

2. Dispositif de commande individuelle des pales selon la revendication 1, **caractérisé en ce que** les actionneurs sont des actionneurs linéaires dotés de deux extrémités déplaçables relativement l'une par rapport à l'autre, dont chacun est lié avec une extrémité au moyen de transmission exclusive du mouvement de commande collectif et avec l'autre extrémité à un levier pivotant d'une pale.

3. Dispositif de commande individuelle des pales selon la revendication 2, **caractérisé en ce que** le moyen de transmission mécanique des mouvements de commande collectifs comprend un élément déplaçable verticalement et relativement par rapport à l'arbre de rotor.

4. Dispositif de commande individuelle des pales selon la revendication 3, **caractérisé en ce que** pour le déplacement vertical de l'élément dans le système non-rotatif de l'hélicoptère est prévu un actionneur.

5. Dispositif de commande individuelle des pales selon la revendication 3 ou 4, **caractérisé en ce que** l'arbre de rotor est creux, **en ce que** l'élément déplaçable verticalement est une tige (26) traversant l'arbre de rotor, et **en ce que** chaque actionneur individuel (16) dans le système rotatif est lié avec une extrémité à la tige.

6. Dispositif de commande individuelle des pales selon la revendication 5, **caractérisé en ce que** pour la liaison des actionneurs (16) à la tige (26) est prévue une araignée (22) à plusieurs branches, celle-ci étant liée dans son centre (24) à la tige (26), et dont les branches (20) s'étendent sur un plan non inclinable et étant disposé de manière opposée à l'arbre de rotor (2) radialement vers l'extérieur, où elles sont liées avec les extrémités (18) aux actionneurs (16).

7. Dispositif de commande individuelle des pales selon une des revendications précédentes, **caractérisé en ce que**, pour chaque pale de rotor l'autorité maximale en raison du réglage de l'actionneur individuel est telle qu'en cas de défaillance de l'actionneur individuel la pale de rotor peut être déplaçée à l'aide du moyen de transmission mécanique de mouvements de commande collectifs dans une position compatible.

8. Dispositif de commande individuelle des pales selon une des revendications précédentes, **caractérisé en ce que** est prévu un ordinateur de commande lié par l'intermédiaire de lignes de signaux à des capteurs, ceux-ci étant associés aux actionneurs individuels, et permettant de déterminer s'il y a une anomalie ou une défaillance de la commande d'une pale de rotor.

9. Procédé de commande d'un hélicoptère avec un dispositif de commande individuelle des pales du rotor selon une des revendications précédentes, dans lequel une unité de commande reçoit des consignes de commande d'un pilote et l'unité de commande pilote, en fonction des consignes de commande, soit les actionneurs associés aux différentes pales de rotor (16) soit les moyens permettant la transmission mécanique des mouvements de commande exclusivement collectifs, sachant que les pourcentages de commande collective sont réglés au moins en majorité par les moyens de transmission mécanique des mouvements de commande exclusivement collectifs et les pourcentages de commande cyclique exclusivement par les actionneurs individuels (16) dans le système rotatif.

10. Procédé selon la revendication 9 pour un hélicoptère doté d'au moins 4 pales de rotor, **caractérisé en ce que** en cas de défaillance de la commande d'une pale de rotor (34) une pale de rotor opposée (28) est pilotée de telle manière qu'il est possible de compenser un couple de tangage ou de roulis produit par la pale de rotor défaillante (34) et l'autorité de commande des autres pales de rotor (30, 32, 36, 38) est augmentée, afin de pouvoir compenser l'effet de commande manquant de la pale de rotor défaillante et de la pale de rotor opposée à la pale de rotor défaillante.

11. Procédé selon la revendication 9 ou 10 pour la commande d'un hélicoptère avec un certain nombre de pales de rotor, permettant un groupement symétrique de pales de rotor dans au moins deux groupes, en particulier avec 4, 6, 8 ou 9 pales de rotor, **caractérisé en ce que** en cas de défaillance de la commande d'une pale de rotor (34) le groupe de pales de rotor auquel appartient la pale de rotor défaillante est piloté de manière différente par rapport à l'autre ou aux autres groupes de pales de rotor et cela cydiquement et/ou collectivement.

12. Procédé selon une des revendications 9 à 11, **caractérisé en ce qu'**en cas de défaillance de la commande d'une pale de rotor (34) toutes variations dans la plage de poussée moyenne du rotor sont compensées par l'adaptation de l'angle collectif de toutes ou d'un groupe symétrique de pales de rotor pas défaillantes.

13. Procédé selon une des revendications 9 à 11, **caractérisé en ce que**, en cas de défaillance de la commande d'une pale de rotor (34), aux deux pales de rotor immédiatement juxtaposées sont imposées des angles de réglage modifiés pour compenser l'effet de commande.

14. Procédé selon une des revendications 9 à 13, **caractérisé en ce que**, en cas de défaillance de la commande d'une pale de rotor (34), des vibrations provoquées par la défaillance sont supprimées par le réglage des angles des autres pales de rotor à un multiple de la fréquence de rotation.

15. Procédé selon une des revendications 9 à 14, **caractérisé en ce qu'**il est fait la différence entre différents types de défaillances, **en ce que** sur la base de données saisies ou déterminées il est conclu à un type de défaillance présente, et **en ce que** à chaque type de défaillance sont associées des mesures de reconfiguration adaptées.
